# NEW EUROPEAN PATENT SPECIFICATION

(11) **EP 2 936 247 B2**
(45) Date of publication and mention of the opposition decision: **12.08.2020**
(45) Mention of the grant of the patent: 01.11.2017
(21) Application number: 13821210.5
(22) Date of filing: 19.12.2013
(51) Int. Cl.: G03B 21/60, A63J 5/00, A63J 25/00, G09F 19/18

(54) **DEVICE FOR THE PRODUCTION OF A FLAT LIGHT DIFFUSING MEDIUM**
VORRICHTUNG ZUR ERZEUGUNG EINES FLACHEN LICHTSTREUENDEN MEDIUMS
DISPOSITIF POUR LA GÉNÉRATION D'UN MEDIUM PLAT DIFFUSANT DE LA LUMIÈRE

(30) Priority: 20.12.2012 PL 40215112
(43) Date of publication of application: 28.10.2015
(73) Proprietor: Ion Concept Sp z.o.o., 02-797 Warszawa (PL)
(72) Inventor: SKUTELA, Daniel, PL-02-763 Warszawa (PL)
(74) Representative: Domon, Magdalena
(86) International application number: PCT/PL2013/000168
(87) International publication number: WO 2014/098633

(56) References cited:
- EP-A1- 1 362 260
- WO-A1-2008/152183
- WO-A1-2010/069368
- WO-A2-2011/117721
- US-A- 5 270 752
- US-A1- 2004 001 182

## Description

The invention relates to a device for the production of light diffusing flat medium, especially for the projector of image projection in the laminar air streams saturated with any light diffusing medium.

During company events, product promotion campaigns or cultural performances, the solutions enabling almost literally "suspension" in the air of projected animations, are more and more, sought after. In order to achieve this, the light ray on its way has to run into the diffusing medium. In most cases, it is a fixed screen, which reflects, or diffuses the light, which then becomes visible for us. The question arises, how to project an image on something, which is not a solid body.

The first successful "screens in the air" were water curtains. Water falling in narrow trickles, like waterfall, in a natural way creates such screen, on which one could project the image. This method, although showy, is practically useless in a small-scale applications, e.g. in closed rooms. Therefore, in the process of searching for better quality "screen in the air", instead of water, the air with increased humidity was used. Micro-drops (with the size of fog particles), mostly generated by means of ultra-sound membranes, are featuring properties of light diffusion as good as drops of falling water. It is necessary only to create of them, in controlled way a flat laminar surface, on which one could project an image.

The key issue is creation of a freely long slot, from which the light diffusing medium in a form of smoke, fog, or other gas or liquid, escapes vertically upwards (aside or downwards).

The medium, which gets out from chamber slot, even at high pressure creates flat surface, rising for maximum 3-4 cm upwards. This is definitely not enough, to enable projection of a legible image. This happens because escaping steam collides with stationary air and instantly becomes turbulent, whirling, and ceases to be flat. In this form, it is not fit for the projection on it of any image.

From patent description US 5270752, there is a known solution, which is using the air curtains, created by parallel-directed two air streams, with a fog layer situated between them.

The method, although enabling projection of an image, unfortunately has many disadvantages. Fog, in spite of the fact, that it remains within a relatively narrow layer continues to be turbulent in its place restricted by air-curtains. This happens, because there is no possibility to equalize the outlet velocity, of both the fog stream, as well as the pressures of air-curtains. Therefore, such screen is not fit for the projection of high quality image, since details of the image are not visible. Another disadvantage of such solution is condensation of water. The device, due to these turbulences requires a generation of large amount of fog, which after prolonged use of the device results in condensation of water steam, and creation of water 'pools".

From patent description EP 1362260, there is a known solution of Fogio Oy Company. The Originator suggests the generation of one mass of air with laminar flow, as well as supplying to its inside the light diffusing medium, by means of nozzles or perforated pipe. The laminar airflow should be a conveyor for light diffusing medium. This way one mass of air containing light diffusing medium inside will be created. The disadvantage of this solution is the method of supplying the light diffusing medium to the inside of laminar flow. As it is known from the physics, insertion of anything into the laminar flow upsets its laminar character. Therefore, installation of nozzles or perforated pipes should upset the flow, resulting in the fact, that this solution is not free from disadvantages.

In order to obtain the ideally flat and laminar streams of fog, one should equalize the outlet velocities of fog layer with the velocity and pressure of the air from air-curtains. It is not possible to achieve this aim by mere regulating the pressure and velocities through controlling of the relevant fans. Even minimum differences, instantly result in the turbulence. For this reason, it is necessary to allow the pressures and velocities to equalize themselves already inside a device.

Solution dedicated to equalize pressures and velocities already inside the device was demonstrated by IO2 Technology Company, in U.S patent description US 2004001182 (also published as WO2004003880).

In order to deliver high degree of uniformity, the microenvironment generation system described in US2004001182 is composed of (i) means generating diffusing (dispersing) medium, (ii) means to move air, for example fan or blower (198), (iii) sheets/layers of straight long guiding channels (ex. baffles, vents or meshes) (203) and (iv) equalizing chambers situated between sheets of guiding channels (206).

According to this invention, the surrounding ambient air or exhausted air (198) from the heat exchanger passes through means to move this air, such as by an axial, tangential fan or blower (199) housed within an enclosure (200) with sidewalls. Air is mixed into a first stage equalizing chamber (201) to balance air speed and direction within air space (202) in enclosure (200). Subsequently the air passes through a linear parallel baffle or vent (203), of length and cell diameter size determined by the Reynolds equation, to produce a laminar airflow in which the ejection orifice end (233), and injection orifice end (234) are colinear with the laminar airflow microenvironment (235). Simultaneously, the particle cloud laminar ejection, thin walled nozzle (204) ejects particle cloud material towards the exterior (205) into the laminar airflow microenvironment (235). Since there are invariably subtle differences in temperature and velocity between the cloud and microenvironment, the two airflows pass through a final equalization chamber (206) to further stabilize, before being ejected into the air (205). According to this invention, equalization can be achieved by several equalizing chambers situated between sheets of guiding channels (i.e. offsetting baffles).

According to this invention, stabilization of air and medium is a two-step process. First, air-curtains are stabilized alone without adding any medium. This stabilization is achieved by means of simple, long, narrow channels separated by hollow spaces called equalizing chambers, in which equalized are the pressures and velocities in the individual channels.

Next, when air is practically stabilized, the medium is added. The outlet of a medium in a form of e.g. fog, takes place just before the last upper equalizing chamber, and therefore in last equalizing chamber, pressures and velocities of the curtains and layer of fog are equalized. The whole lot is then covered by the subsequent layer of long channels, which guide the air into parallel streams, and further, if necessary, by equalizing chambers, in which the running air from different channels (of which also those with fog) have possibility to equalize pressures and velocities.

Even if this solution enables equalization of air-curtains and diffusing medium, it present many disadvantages.

The use of equalizing chambers placed between layers of channels does not provide fast and direct equalization. In these chambers, for a very short moment, the air stops its flow through the channel, and thereby is subject to turbulence, since at that moment, the velocities and pressure, are not yet equalized. This is forcing to introduce the air into subsequent channels and subsequent equalization chambers, and therefore there are several such cycles of equalization needed to equalize pressure and velocity.

Furthermore the use of several equalization chambers does not allow introducing fog or steam together with air directly into first equalization chamber. In equalizing chamber, the air with fog or steam is mixed with the air from curtains. This mixing is needed to equalize pressures and velocities, however the side effect of mixing of these media is diffusion of fog over larger width. Therefore, the number of stabilizing chambers has to be limited.

Moreover, in the solution described in WO 2004003880 (US 2004001182), the intake of stabilizing chambers is situated close over the fan generating inflow of curtains. Since every fan generates the strongest gust at the tips of its blades, which is weakening when getting closer to its axis of rotation, this solution does not guarantee even air distribution and does not allow air stabilization before entering into channels.

Therefore, the aim of solution according to the present invention is a presentation of device for generation of light diffusing medium containing channels of particular structure, enabling stabilization of air with diffusing (dispersing) medium without need to use non-functional stabilizing chambers placed between sheets of channels. Furthermore the purpose of the present invention is to provide the device for production of light diffusing medium, that would enable introducing and stabilizing medium together with air. At the same time, the aim of the invention is to assure better guidance and stabilization of air-curtain streams.

The device for generation of a light diffusing flat medium, consisting of a chamber configured to generate a diffusing medium, fans to blow air arranged adjacent to channels forming sheets of side-by-side connected channels for guiding air and diffusing medium, is characterized in that, a plurality of sheets of side-by-side connected channels arranged to guide air forming air-curtains and diffusing medium, are overlying one sheet onto another in a way that channels of one sheet are arranged non-coaxially on the channels of any overlying sheet.

It is preferable, that the distance of the first sheet of channels from fans to blow air is equal to the diameter of fans to blow air.

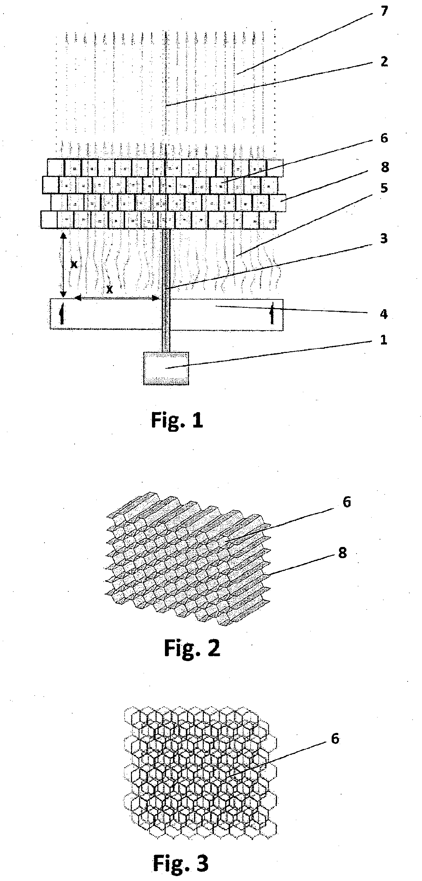

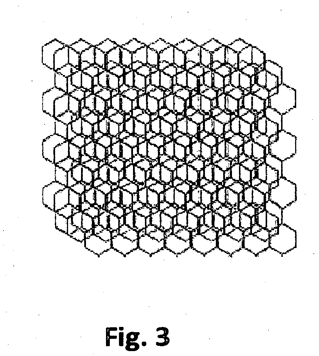

The subject of invention, is shown in the drawing, in which Fig. 1 shows the end view of device for production of medium, fig. 2 shows the perspective view of individual layer (sheet) of air-curtain guiding channels with hexagonal cross-section, whereas fig. 3 shows the top view of superimposed sheets of channels (overlying one onto another) of the air-curtain guiding channels with hexagonal cross-sections.

The device for generation of light diffusing medium consists of the chamber **1** generating diffusing medium **2** together with the channel **3** feeding the diffusing medium **2,** fans **4** for air-blow **5** as well as laid in sheets channels **6** guiding the diffusing medium **2** and air **5** forming air-curtains **7.**

As presented in a non-limiting example, individual channels **6** are connected side-by-side forming sheets **8** with honey-comb structure, with very thin walls.

First sheet **8** of channels **6** is situated at a distance **x** equal to the diameter of fans **4,** which is causing, that the air **5** itself from fans **4** is being equalized over its whole surface.

Individual sheets **8** of the channels **6** are overlying one onto another, in a way that channels **6** of one sheet **8** are situated non-coaxially on the channels **6** of another sheet **8**. Since the channels **6** of one sheet **8** are non-coaxial with channels **6** of another sheet **8**, the air cannot pass directly through the guiding channel **6**. In this way, the air stream **5** flowing in one channel **6** of first sheet **8** after a moment hits the edge of subsequent channels **6** of upper sheet **8**, which cuts it (air stream) into few others, and at the same time stabilizes it. Equalization of pressure and velocity of blown-in air **5,** with diffusing medium **2** in so designed channels **6**, provided for guiding of air-curtains **7**, is achieved by a few layers (sheets) **8** of side-by-side connected adjacent channels **6** (in this case 2cm thick), overlying one sheet onto another. Non-coaxial arrangement of channels enables sharing pressure and velocity between channels **6**. Since in the solution according to invention the air-guiding channels **6** are arranged non-coaxially one on another, there are thousands of such places equalizing pressures, velocities and temperatures. Individual streams are passing from one channel into another and pressures and velocities are equalized without need of any breaks ("equalizing chambers"). During the passage from one sheet of channels into another (upper sheet of channels), the air stream meets air from neighboring channel, thus making opportunity for equalization. Owing to this solution, the air on its way does not run into the hollow spaces, where it could be dispersed. During the course of its travel it remains in the guiding channel and has opportunity to equalize pressure and velocity with those of neighboring channels.

Device according to the invention produces flat layer of air saturated with any light diffusing (dispersing) medium (e.g. smoke, fog, steam, dust particles etc.). Owing to obtaining such surface of "suspended" in the air screen, there is possibility to project on it the image from multimedia projector, laser, slide projector etc.

The embodiment of air guiding channels with hexagonal cross-section, does not exclude the use of channels with other cross-sections (circular or other polygonal).

The solution according to invention has a number of advantages in relation to other, known in the art solutions of this kind:
- Because of invention application, one may obtain an effect of very narrow air-curtain guiding channel without effect of clogging with condensed water. As results from the experience, the narrower channel the better stabilization of the stream. The cross-section of uniform smaller than 8 mm becomes quickly clogged with water drop, and surface tension is keeping it there, thus preventing the flow. Looking from the above on non-coaxial arrangement of air-curtain guiding channels layers (sheets) it is visible, that owing to such solution the channels have much smaller diameter than 8 mm and do not clog simultaneously.
- In the solution, according to the invention, the stream of air with medium remains laminar over the section much longer than that in the known solution of IO2 Technology Company. This is conditional upon two factors. The first one is the width of air-curtains. The wider curtain is, the smoke stream remains laminar over longer section from its source. The second factor is the number of sheets of the air-curtain guiding channels. There is one principle: the more, the better. Since there are no equalization chambers, the air is better equalized without risk of medium dispersion and there is no limitation with regard to layers (sheets) quantity.
- Smaller quantity of the medium for image generation is needed. The laminar stream keeps its properties for much longer and it is more slowly changing into a form of gas and disappears.
- Produced screen enables also projection of larger amount of details. The laminar stream is thinner; thereby there is a possibility of obtaining slimmer screen, which in turn gives possibility of projecting smaller pixels from projector.
- In the solution according to the invention, there is no need for stabilizing chambers, which are increasing streams curvature. The air stream passing through the sheets of air-curtain guiding channels, overlying one onto another in a non-coaxial arrangement is self-stabilizing. The more sheets of channels overlying one onto another in a non-coaxial arrangement, the better equalization of velocities and pressures of air stream takes place.

## Claims

1. A device for generation of a light diffusing flat medium, consisting of a chamber (1) configured to generate a diffusing medium (2), fans (4) to blow air (5) arranged adjacent to channels (6) forming sheets (8) of side-by-side connected channels (6) for guiding air (5) and diffusing medium (2), **characterized in that** a plurality of sheets (8) of side-by-side connected channels (6) arranged to guide air (5) forming air-curtains (7) and diffusing medium (2) are overlying one sheet (8) onto another in a way that channels (6) of one sheet (8) are arranged non-coaxially on the channels (6) of any overlying sheet (8).

2. The device according to claim 1 is **characterized in that**, the distance from the first sheet of channels (6) from fans (4) to blow air (5) is equal to the diameter of fans (4) to blow air (5).

## Patentansprüche

1. Eine Vorrichtung zur Erzeugung eines flachen Lichtstreuenden Mediums, bestehend aus einer Kammer (1), die ermöglicht, ein zerstreuendes Medium (2) zu erzeugen, Ventilatoren (4) der Blasluft (5), gelegen in der Nähe der aus den Bogen (8) gebildeten, beieinander verbundenen Kanäle (6) zur Führung der Luft (5) sowie des zerstreuenden Mediums (2), **dadurch gekennzeichnet ist, dass** zahlreiche Bogen (8) der nebeneinander verbundenen Kanäle (6), die zur Führung der die Luftvorhänge (7) bildenden Luft (5) sowie des zerstreuenden Mediums (2) eingereiht sind, so verstaut sind, dass ein Bogen (8) auf einem zweiten so liegt, dass die Kanäle (6) eines Bogens (8) auf den Kanälen (6) eines beliebigen sich einander überlagernden Bogen (8) nicht koaxial liegen.

2. Die Vorrichtung nach Anspruch 1 ist **dadurch gekennzeichnet ist, dass** der Abstand des ersten Kanalbogens (6) von den Ventilatoren (4) der Blasluft (5) dem Durchmesser der Ventilatoren (4) der Blasluft (5) gleich ist.

## Revendications

1. Dispositif pour la génération d'un médium plat diffusant la lumière, composé d'une chambre (1) permettant la production d'un médium diffusant (2), de ventilateurs (4) de circulation d'air forcée (5), situés près des canaux (6) composant des feuilles (8) des canaux connectés côte à côte (6) de conduction d'air (5) et du médium diffusant (2), **caractérisé en ce que** de nombreuses feuilles (8) des canaux connectés côte à côte (6) placés pour la conduction d'air (5) formant des rideaux d'air (7) et du médium diffusant (2), sont situées une feuille (8) sur l'autre, de manière que les canaux (6) d'une feuille (8) sont situés de manière décalée sur des canaux (6) d'une feuille sus-jacente (8) quelconque.

2. Dispositif selon la revendication 1 **caractérisé en ce que** la distance entre la première feuille des canaux (6) et les ventilateurs (4) de circulation d'air forcée (5) égale au diamètre des ventilateurs (4) de circulation d'air forcée (5).
